# EUROPÄISCHE PATENTANMELDUNG

(11) **EP 2 586 561 A1**
(43) Veröffentlichungstag der Anmeldung: **01.05.2013**
(21) Anmeldenummer: 11186698.4
(22) Anmeldetag: 26.10.2011
(51) Int. Cl.: B23K 26/34, F01D 5/00

(54) **Strategie der Verfahrbewegung zur Erhaltung des einkristallinen Aufbaus beim Auftragsschweißen**

(71) Anmelder: Siemens Aktiengesellschaft, 80333 München (DE); Fraunhofer-Gesellschaft zur Förderung der angewandten Forschung e.V., 80686 München (DE)
(72) Erfinder: Arjakine, Nikolai, 10555 Berlin (DE); Burbaum, Bernd, 14612 Falkensee (DE); Pirch, Norbert, 52074 Aachen (DE)

(57) **Zusammenfassung**

Nicht nur durch das Starten einer Schweißbahn (13') immer von ein und derselben Seite aus für eine Schweißlage (22'), sondern auch durch den gegenläufigen Verlauf in der darauffolgenden Schweißlage (22") werden die Schweißeigenspannungen ausgeglichen, so dass es zu keiner Verkippung der Vorzugsrichtung kommt.

## Beschreibung

Beim Auftragsschweißen auf gerichteten Bauteilen findet diese Strategie Anwendung.

Hochtemperaturbauteile, wie z.B. Turbinenschaufeln, werden wieder aufgearbeitet, indem Materialverlust durch Auftragsschweißen ausgeglichen wird.

Bei Substraten von Bauteilen, die eine gerichtete Struktur, d.h. kolumnar erstarrte Körner oder eine einkristalline Struktur aufweisen, ist es zur Erhaltung der mechanischen Festigkeit notwendig, dass das Auftragsschweißen ebenfalls eine gerichtete Struktur passend zu der des Substrats aufweist. Jedoch kommt es immer wieder zu einer Verschiebung der Kristallrichtung in den mehreren Lagen, was zur Spannung und damit zu Rissen führen könnte.

Es ist daher Aufgabe der Erfindung oben genanntes Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1, 2: Ausführungsbeispiele der Erfindung,
- Figur 3: eine Turbinenschaufel und
- Figur 4: eine Liste von Superlegierungen.

Die Beschreibung und Figuren stellen nur Ausführungsbeispiele der Erfindung dar.

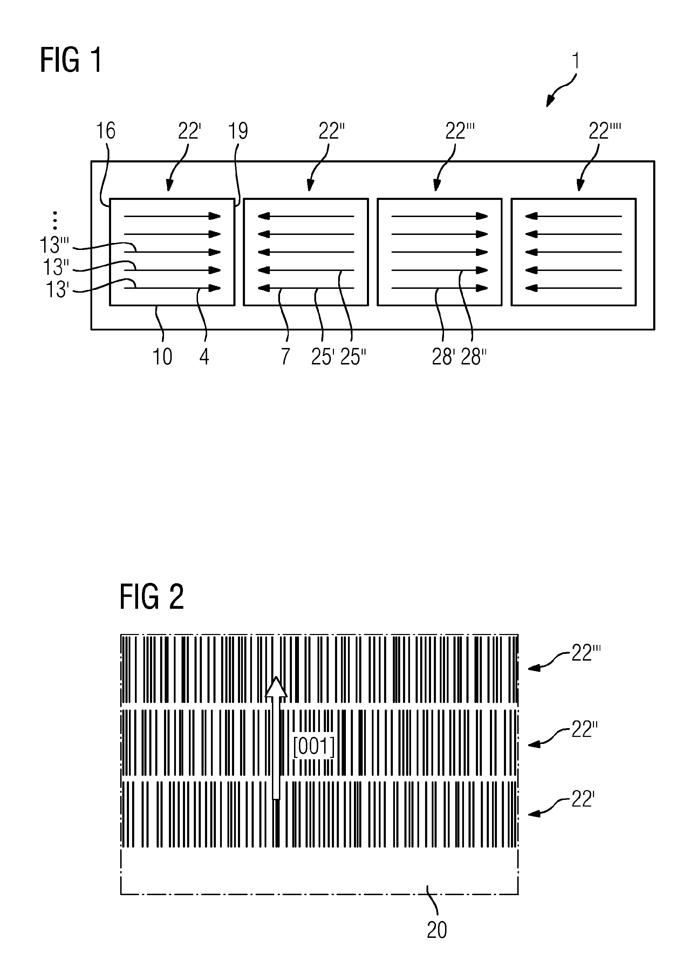

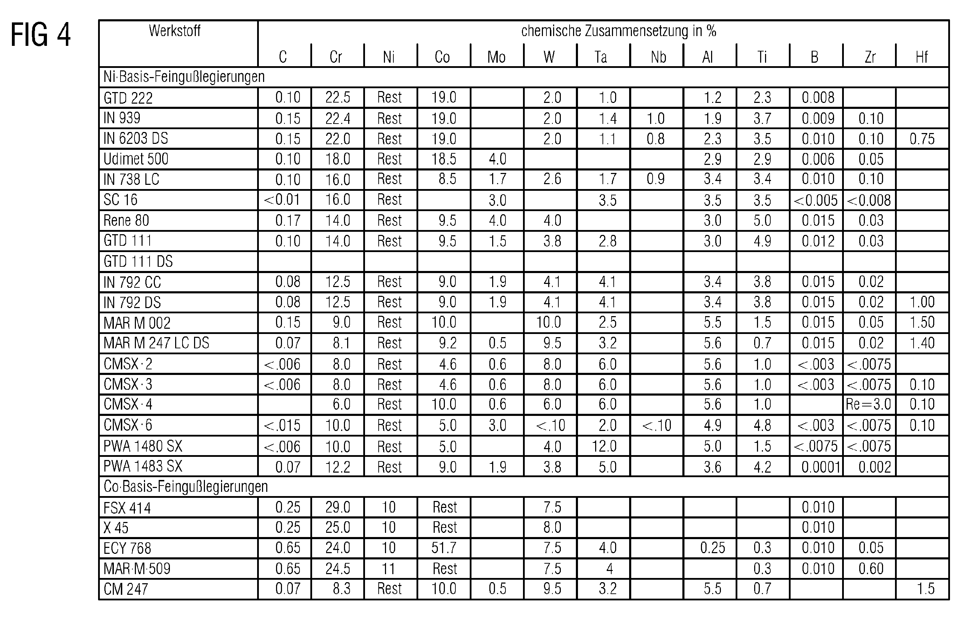

In Figur 1 ist schematisch die Verfahrensfolge der Verfahrrichtungen 4, 7 beim Auftragsschweißen von Schweißbahnen 13ʹ, 13ʺ , ..., 25ʹ, 25ʺ , ..., 28ʹ, 28ʺ auf vorzugsweise nickelbasierten Superlegierungen 20 (Fig. 4) gezeigt, die eine gerichtete Struktur aufweisen.

Auf einer Fläche 10 soll Material aufgeschweißt werden. Dies erfolgt vorzugsweise durch ein Laserauftragsschweißen, ganz insbesondere Pulverlaserauftragsschweißen.

Die Fläche 10 wird nicht mäanderförmig abgefahren, sondern die einzelnen Schweißbahnen 13', 13", 13ʺʹ einer Schweißlage 22ʹ, 22ʺ , ... beginnen immer wieder an der ersten Seite 16 der zu schweißenden Fläche 10 und enden auf der anderen, gegenüberliegenden zweiten Seite 19. Es wird also nicht mäanderförmig verfahren, sondern der Schweißkopf muss immer von der zweiten Seite 19 erst wieder zur ersten Seite 16 zurückgefahren werden, ohne dass Material aufgetragen wird. Dieser Zeitverlust wird jedoch bewusst in Kauf genommen.

Ist die Fläche 10 mit der ersten Schweißlage 22' und damit mit Schweißbahnen 13', 13", 13ʹʺ , ... bedeckt, so folgt die zweite Schweißlage 22' mit mehreren Schweißbahnen 25', 25ʺ , ... **.** In der zweiten Schweißlage 22" wird jedoch ihre Verfahrrichtung in eine zweite Verfahrrichtung 7 geändert, nämlich wird hier zuerst von der zweiten Seite 19 zu der ersten Seite 16 verfahren und dies jeweils für jede Schweißbahn 25', 25", ... oder allgemeiner: die zweite Verfahrrichtung 7 verläuft entgegengesetzt zur ersten oder vorherigen Verfahrrichtung. In der darauf folgenden Schweißlage 22ʺʹ wird die Verfahrrichtung wieder geändert wie in der vorletzten Schweißlage 22ʹ .

Dieses lagenweise Abwechseln der Verfahrrichtung wird immer wiederholt.

Durch diese Änderung der Verfahrrichtung kommt es zu keiner Verkippung einer Vorzugsachse einer gerichteten Struktur im Substrat, vorzugsweise der [001] in den Schweißlagen 22', 22ʺ , ..., wie es in Figur 2 dargestellt ist.

Die Figur 2 zeigt ein Substrat 20, insbesondere mit einkristalliner oder kolumar gerichteter Struktur, ganz insbesondere gemäß Figur 4, auf dem die Schweißlagen 22', 22", 22ʹʺ aufgetragen sind.

Man erkennt sehr deutlich, dass in den Schweißlagen 22', 22ʺ ,... keine Verkippung der Vorzugsrichtung gegeben ist, weil die durch das Schweißen eingebrachten Eigenspannungen sich ausgleichen.

Somit wird eine gerichtete Struktur in den Schweißlage 22', 22ʺ ,... ermöglicht und erzeugt über mehrere Schweißlagen 22', 22ʺ ,... hinweg.

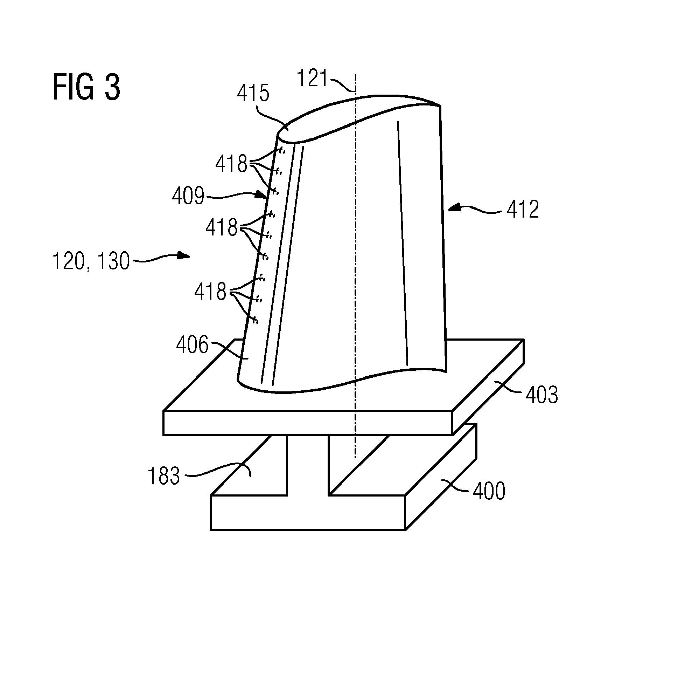

Die Figur 3 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zum Auftragsschweißen auf ein gerichtet erstarrtes Substrat (20),
bei dem die zu schweißende Fläche (10) lagenweise mit Schweißbahnen (13ʹ , 13ʺ , ...) versehen wird,
wobei jede Schweißbahn (13', 13", ...) für eine erste Schweißlage (22') immer von ein und derselben ersten Seite (16) der zu schweißenden Fläche (10) in einer ersten Verfahrrichtung (4) beginnt,
wobei in der der ersten Schweißlage (22') folgenden zweiten Schweißlage (22") die zweite Verfahrrichtung (7) für die Schweißbahnen (25', 25ʺ , ...) umgedreht wird und insbesondere von der der ersten Seite (16) gegenüberliegenden zweiten Seite (19) beginnt,
und dieser Prozess der abwechselnden Verfahrrichtung (4, 7) für jede weitere Schweißlage (22ʺʹ, ...) wiederholt wird.

2. Verfahren nach Anspruch 1,
bei dem ein Laserauftragsschweißen verwendet wird, insbesondere ein Laserpulverauftragsschweißen.

3. Verfahren nach Anspruch 1 oder 2,
bei dem ein nickelbasiertes Substrat (20) geschweißt wird, das kolumnare Körner aufweist.

4. Verfahren nach Anspruch 1 oder 2,
bei dem das nickelbasierte Substrat (20) eine einkristalline Struktur aufweist.

5. Verfahren nach einem oder mehreren der vorherigen Ansprüche,
bei dem durch das Auftragsschweißen eine gerichtet erstarrte Struktur erzeugt wird.
